# EUROPÄISCHE PATENTSCHRIFT

(11) **EP 1 372 807 B1**
(45) Veröffentlichungstag und Bekanntmachung des Hinweises auf die Patenterteilung: **13.10.2004**
(21) Anmeldenummer: 02732483.9
(22) Anmeldetag: 14.03.2002
(51) Int. Cl.: B01D 3/40, C07C 63/00, B01D 3/36

(54) **IONISCHE FLÜSSIGKEITEN ALS SELEKTIVE ZUSATZSTOFFE FÜR DIE TRENNUNG ENGSIEDENDER ODER AZEOTROPER GEMISCHE**
IONIC LIQUIDS AS SELECTIVE ADDITIVES FOR THE SEPARATION OF CLOSE-BOILING OR AZEOTROPIC MIXTURES
LIQUIDES IONIQUES COMME ADDITIFS SELECTIFS POUR LA SEPARATION DE MELANGES AZEOTROPIQUES A PLAGE D'EBULLITION ETROITE

(30) Priorität: 20.03.2001 DE 10114734; 17.07.2001 DE 10136614
(43) Veröffentlichungstag der Anmeldung: 02.01.2004
(73) Patentinhaber: BASF AKTIENGESELLSCHAFT, 67056 Ludwigshafen (DE)
(72) Erfinder: ARLT, Wolfgang, 16540 Hohen Neuendorf (DE); SEILER, Matthias, 13507 Berlin (DE); JORK, Carsten, 10717 Berlin (DE); SCHNEIDER, Thomas, 10243 Berlin (DE)
(86) Internationale Anmeldenummer: PCT/EP2002/002824
(87) Internationale Veröffentlichungsnummer: WO 2002/074718

(56) Entgegenhaltungen:
- WO-A-01/98239

## Beschreibung

Die Erfindung betrifft ein Verfahren zur Trennung von engsiedenden oder azeotropen Gemischen unter Verwendung ionischer Flüssigkeiten als selektive Zusatzstoffe bei der Rektifikation nach Anspruch 1.

In der Industrie treten eine Vielzahl von Flüssigmischungen auf, die sich nicht durch konventionelle Rektifikation, sondern vorzugsweise durch Extraktivrektifikation [Stichlmair, S. und Fair, J., Distillation, ISBN 0-471-25241-7, Seite 241 ff) trennen lassen. Dieser Sachverhalt ist in dem ähnlichen Siedeverhalten der Gemischkomponenten begründet, das heißt in ihrer Eigenschaft, sich bei einem definiertem Druck und einer definierten Temperatur im nahezu gleichen oder gleichen molaren Konzentrationsverhältnis auf die Dampf- und Flüssigphase zu verteilen.

Der Trennaufwand für eine binäre -aus den Komponenten i und j bestehende- Flüssigmischung bei der Rektifikation spiegelt sich im sogenannten Trennfaktor αᵢⱼ, dem Verhältnis der Verteilungskoeffizienten der Komponenten i und j, wider. Je näher der Trennfaktor dem Wert eins kommt, desto aufwendiger wird die Trennung der Gemischkomponenten mittels konventioneller Rektifikation, da entweder die Trennstufenanzahl der Rektifikationskolonne und/oder das Rücklaufverhältnis im Kolonnenkopf vergrößert werden muß. Nimmt der Trennfaktor den Wert eins an, so liegt ein azeotroper Punkt vor, und die weitere Aufkonzentrierung der Gemischkomponenten ist auch durch eine Erhöhung der Trennstufenzahl oder des Rücklaufverhältnisses nicht mehr möglich. Generell ist bei der Verwendung des Trennfaktors zu beachten, dass er größer oder kleiner 1 sein kann, je nachdem ob der Verteilungskoeffizient des Leichtsieders im Zähler oder im Nenner steht. Normalerweise wird der Leichtsieder im Zähler aufgetragen, so dass der Trennfaktor größer 1 ist.

Ein in der Industrie häufig praktiziertes Vorgehen zur Trennung engsiedender -hierbei wird ein Trennfaktor etwa kleiner 1,2 verstanden- oder azeotroper Systeme stellt die Zugabe eines selektiven Zusatzstoffes, des sogenannten Entrainers, in einer Extraktiv-Rektifikation dar. Ein geeigneter Zusatzstoff beeinflußt durch selektive Wechselwirkungen mit einer oder mehreren der Gemischkomponenten den Trennfaktor, so daß die Auftrennung der engsiedenden oder azeotrop-siedenden Gemischkomponenten ermöglicht wird. Bei der Extraktiv-Rektifikation sind die durch die Wirkung des Entrainers erhaltenen Kopf- und Sumpfkomponenten die Zielkomponenten der Kolonne.

Ein Gütemaß für die Intensität der Wechselwirkungen des Entrainers mit einer oder mehreren der Gemischkomponenten stellt die sogenannte Selektivität dar. Die Selektivität ist definiert als das Verhältnis aus Grenzaktivitätskoeffizient der Komponente i zu Grenzaktivitäts-koeffizient der Komponente j, wobei die Komponenten i und j im Entrainer unendlich verdünnt vorliegen [Schult, C. J. et. al.; Infinite-dilution activity coefficients for several solutes in hexadecane and in n-methyl-2-pyrrolidone (NMP): experimental measurements and UNIFAC predictions; Fluid Phase Equilibria 179 (2001) S.117-129). Wie von Schult et. al. dargelegt, führt eine höhere Entrainer-Selektivität zu einer höheren relativen Flüchtigkeit, einem kleineren Rücklaufverhältnis und somit zu niedrigeren Trennkosten. Wie weiter hinten offenbart ist eine möglichst hohe Selektivität z. B. größer 1,3, bevorzugt größer 2,0. angestrebt.

Im folgenden wird die überraschenderweise gefundene Eignung einiger ionischer Flüssigkeiten für die Trennung azeotroper und/oder engsiedender Gemische anhand der Entrainer-Selektivität sowie des Trennfaktors gezeigt. Die für die Entrainer-Selektivität maßgeblichen Aktivitätskoeffizienten bei unendlicher Verdünnung können nach mehreren Methoden bestimmt werden, bevorzugt unter Verwendung der Gas-Flüssig-Chromatographie (GLC oder GLPC) [Schult, C. J. et. al.; Infinite-dilution activity coefficients for several solutes in hexadecane and in n-methyl-2-pyrrolidone (NMP): experimental measurements and UNIFAC predictions; Fluid Phase Equilibria 179 (2001) S.117-129] sowie der in letzterer Veröffentlichung von Schult et. al. verwendeten Gleichungen (4) und (6).

Aus Kostengründen ist man bestrebt, die einzusetzende Zusatzstoffmenge zu minimieren. Der Entrainer befindet sich vorteilhaft im wesentlichen in der flüssigen Phase innerhalb der Kolonne. Erhöhte Mengen würden gegebenenfalls zu einer Vergrößerung des Kolonnendurchmessers führen, bedingen jedoch immer eine Erhöhung des Druckverlustes der Dampfphase in der Kolonne und damit auch einen größeren Exergieverlust. Eine Erhöhung der Entrainermenge führt daher zu erhöhten Invest- und Betriebskosten.

Bei gegebener Kolonnenlänge und gleichem Rücklaufverhältnis führt der größere Trennfaktor zu einem reineren Produkt oder bei gegebener Kolonnenlänge und Reinheit des Kopfproduktes führt der größere Trennfaktor zu einem geringeren Rücklaufverhältnis und damit zu einer Energieersparnis. Bei gegebener Reinheit und gegebenem Rücklaufverhältnis führt eine erhöhte Entrainermenge und ein höherer Trennfaktor zu einer Investkostenersparnis durch eine verkürzte Kolonnenlänge. Damit hat es der planende Ingenieur in der Hand, aufgrund Standort-spezifischer Gegebenheiten die Investoder Betriebskosten (Energiekosten) zu minimieren.

Die WO-A-0198239, veröffentlicht am 27.12.2001 beschreibt die Abtrennung von Olefinen von Nicht-Olefinen mit ionischen Flüssigkeiten.

Die Erfindung betrifft ein Verfahren, bei dem eine neuartige Substanzklasse, die ionischen Flüssigkeiten, zur Trennung engsiedender oder azeotroper Flüssigmischungen eingesetzt wird, da diese ionischen Flüssigkeiten überraschenderweise den konventionellen Zusatzstoffen überlegen sind. Die Überlegenheit kann direkt an Selektivität und Trennfaktor abgelesen werden. Bei Verwendung einer geeigneten ionischen Flüssigkeit ist der Trennfaktor am azeotropen Punkt stärker verschieden von eins als bei Verwendung eines konventionellen Zusatzstoffes in gleichen Mengen.

Unter ionischen Flüssigkeiten werden solche verstanden, wie sie von Wasserscheid und Keim in der Angewandten Chemie 2000, 112, 3926-3945 definiert sind. Die Stoffgruppe der ionischen Flüssigkeiten stellt ein neuartiges Lösungsmittel dar. Wie in der genannten Druckschrift aufgeführt handelt es sich bei ionischen Flüssigkeiten um bei relativ niedrigen Temperaturen schmelzende Salze mit nichtmolekularem, ionischen Charakter. Sie sind bereits bei relativ niedrigen Temperaturen kleiner 200°C, bevorzugt kleiner 150°C, besonders bevorzugt kleiner 100°C flüssig und dabei relativ niedrigviskos. Sie besitzen sehr gute Löslichkeiten für eine große Anzahl organischer, anorganischer und polymerer Substanzen.

Ionische Flüssigkeiten sind im Vergleich zu ionischen Salzen bei wesentlich geringeren Temperaturen (in der Regel unterhalb von 200°C,) flüssig und besitzen häufig einen Schmelzpunkt unterhalb von 0°C, im Einzelfall bis -96°C, was wichtig für die industrielle Umsetzung der Extraktivrektifikation ist.

Darüber hinaus sind ionische Flüssigkeiten in der Regel nicht brennbar, nicht korrosiv und wenig viskos und zeichnen sich durch einen nicht meßbaren Dampfdruck aus.

Als ionische Flüssigkeiten werden erfindungsgemäß solche Verbindungen bezeichnet, die mindestens eine positive und mindestens eine negative Ladung aufweisen, insgesamt jedoch ladungsneutral sind, und einen Schmelzpunkt unter 200°C aufweisen, bevorzugt unter 100, besonders bevorzugt unter 50°C.

Die Ionischen Flüssigkeiten können auch mehrere positive oder negative Ladungen aufweisen, beispielsweise 1 bis 5, bevorzugt 1 bis 4, besonders bevorzugt 1 bis 3, ganz besonders bevorzugt 1 bis 2, insbesondere jedoch je eine positive und negative Ladung. Die Ladungen können sich an verschiedenen lokalisierten oder delokalisierten Bereichen innerhalb eines Moleküls befinden, also betainartig, oder auf je ein getrenntes Anion und Kation verteilt sein. Bevorzugt sind solche Ionischen Flüssigkeiten, die aus mindestens einem Kation und mindestens einem Anion aufgebaut sind. Kation und Anion können, wie oben ausgeführt, ein oder mehrfach, bevorzugt einfach geladen sein.

Selbstverständlich sind auch Gemische verschiedener ionischer Flüssigkeiten denkbar.

Bevorzugt als Kation sind Ammonium- oder Phosphoniumionen, oder solche Kationen, die mindestens einen fünf- bis sechsgliedrigen Heterocyclus enthalten, der mindestens ein Phosphor- oder Stickstoffatom sowie gegebenenfalls ein Sauerstoff- oder Schwefelatom aufweist, besonders bevorzugt solche Verbindungen, die mindestens einen fünf- bis sechsgliedrigen Heterocyclus enthalten, der ein, zwei oder drei Stickstoffatome und ein Schwefel- oder ein Sauerstoffatom aufweist, ganz besonders bevorzugt solche mit ein oder zwei Stickstoffatomen.

Besonders bevorzugte Ionische Flüssigkeiten sind solche, die ein Molgewicht unter 1000 g/mol aufweisen, ganz besonders bevorzugt unter 350 g/mol.

Weiterhin sind solche Kationen bevorzugt, die ausgewählt sind aus den Verbindungen der Formeln (Ia) bis (Iw), 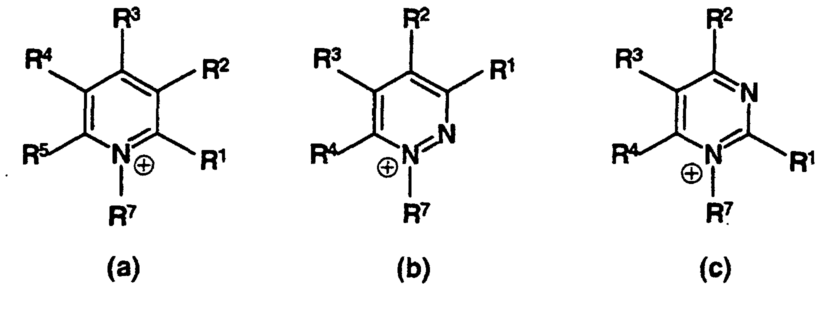 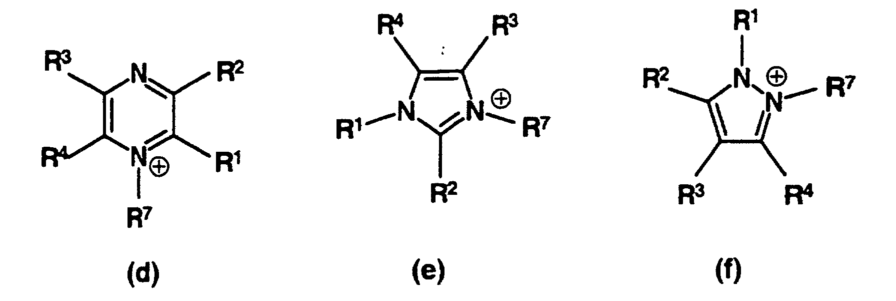 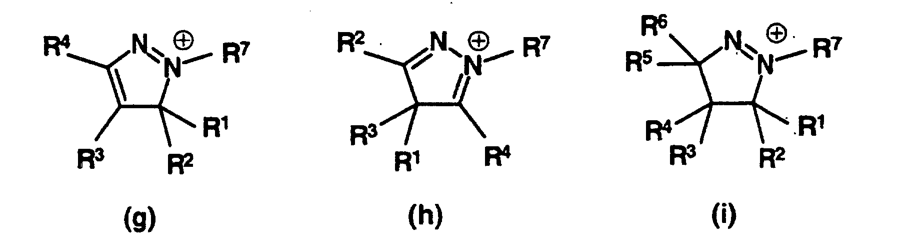 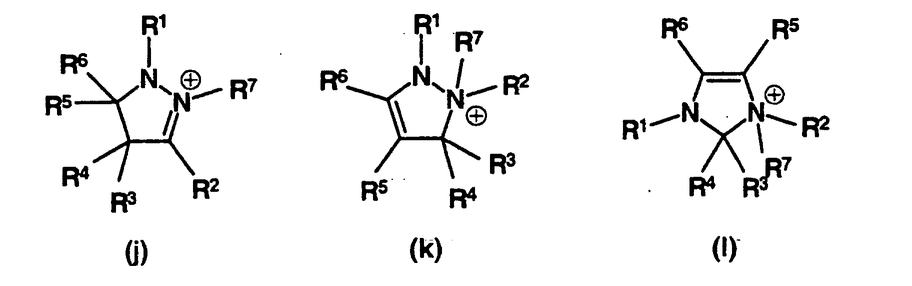 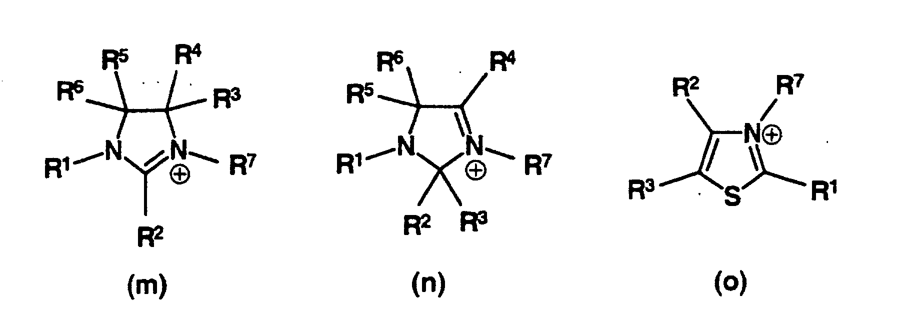 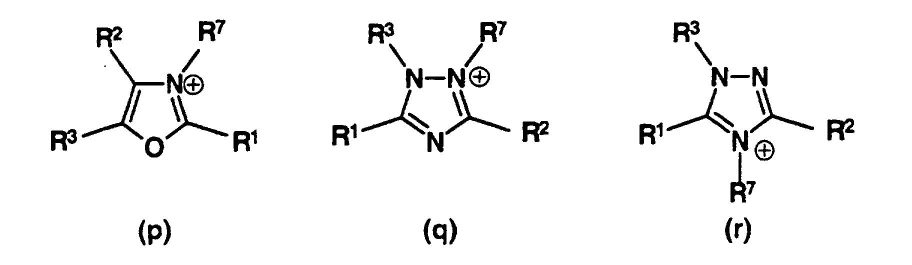 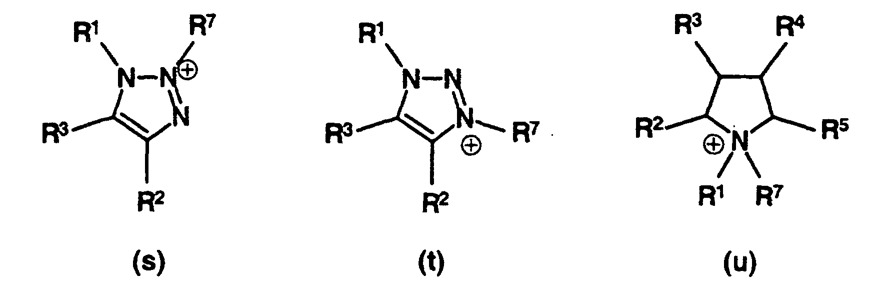 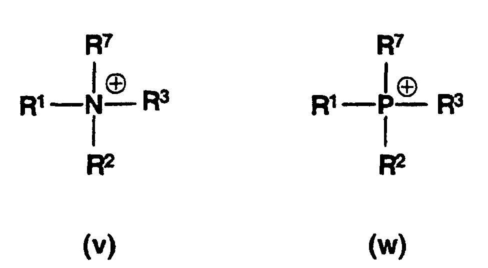 sowie Oligo-bzw. Polymere, die diese Strukturen enthalten,
worin
R¹, R², R³, R⁴, R⁵, R⁶ und R⁷ unabhängig voneinander jeweils C₁ - C₁₈-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₁₈-Alkyl, C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus bedeuten oder zwei von ihnen gemeinsam einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können.
R¹, R², R³, R⁴, R⁵ und R⁶ können zusätzlich dazu Wasserstoff bedeuten.
R⁷ kann darüberhinaus C₁ - C₁₈-Alkyloyl (Alkylcarbonyl), C₁ - C₁₈-Alkyloxycarbonyl, C₅ - C₁₂-Cycloalkylcarbonyl oder C₆ - C₁₂-Aryloyl (Arylcarbonyl) bedeuten, wobei die genannten Reste jeweils durch funktionelle Gruppen, Aryl, Alkyl, Aryloxy, Alkyloxy, Halogen, Heteroatome und/oder Heterocyclen substituiert sein können. Darin bedeuten
gegebenenfalls durch funktionelle Gruppen, Aryl, Alkyl, Aryloxy, Alkyloxy, Halogen, Heteroatome und/oder Heterocyclen substituiertes C₁ - C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, Benzyl, 1-Phenylethyl, 2-Phenylethyl, α,α-Dimethylbenzyl, Benzhydryl, p-Tolylmethyl,1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, 2-Chlorethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenylthioethyl, 2,2,2-Trifluorethyl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 3-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl und,
gegebenenfalls durch ein oder mehrere Sauerstoff- und/oder Schwefelatome und/oder ein oder mehrere substituierte oder unsubstituierte Iminogruppen unterbrochenes C₂ - C₁₈-Alkyl beispielsweise 5-Hydroxy-3-oxa-pentyl, 8-Hydroxy-3,6-dioxa-octyl, 11-Hydroxy-3,6,9-trioxa-undecyl, 7-Hydroxy-4-oxa-heptyl, 11-Hydroxy-4,8-dioxa-undecyl, 15-Hydroxy-4,8,12-trioxa-pentadecyl, 9-Hydroxy-5-oxa-nonyl, 14-Hydroxy-5,10-oxa-tetradecyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxanonyl, 14-Methoxy-5,10-oxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl.

Bilden zwei Reste einen Ring, so können diese Reste gemeinsam bedeuten 1,3-Propylen, 1,4-Butylen, 2-Oxa-1,3-propylen, 1-Oxa-1,3-propylen, 2-Oxa-1,3-propylen, 1-Oxa-1,3-propenylen, 1-Aza-1,3-propenylen, 1-C₁-C₄-Alkyl-1-aza-1,3-propenylen, 1,4-Buta-1,3-dienylen, 1-Aza-1,4-buta-1,3-dienylen oder 2-Aza-1,4-buta-1,3-dienylen.

Die Anzahl der Sauerstoff- und/oder Schwefelatome und/oder Iminogruppen ist nicht beschränkt. In der Regel beträgt sie nicht mehr als 5 in dem Rest, bevorzugt nicht mehr als 4 und ganz besonders bevorzugt nicht mehr als 3.

Weiterhin befinden sich zwischen zwei Heteroatomen in der Regel mindestens ein Kohlenstoffatom, bevorzugt mindestens zwei.

Substituierte und unsubstituierte Iminogruppen können beispielsweise Imino-, Methylimino-, *iso*-Propylimino, n-Butylimino oder tert-Butylimino sein.

Weiterhin bedeuten
funktionelle Gruppen Carboxy, Carboxamid, Hydroxy, Di-(C₁-C₄-Alkyl)-amino, C₁-C₄-Alkyloxycarbonyl, Cyano oder C₁-C₄-Alkyloxy,
gegebenenfalls durch funktionelle Gruppen, Aryl, Alkyl, Aryloxy, Alkyloxy, Halogen, Heteroatome und/oder Heterocyclen substituiertes C₆ - C₁₂-Aryl beispielsweise Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2-oder 4-Nitrophenyl, 2,4- oder 2,6-Dinitrophenyl, 4-Dimethylaminophenyl, 4-Acetylphenyl, Methoxyethylphenyl oder Ethoxymethylphenyl,
gegebenenfalls durch funktionelle Gruppen, Aryl, Alkyl, Aryloxy, Alkyloxy, Halogen, Heteroatome und/oder Heterocyclen substituiertes C₅ - C₁₂-Cycloalkyl beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie z.B. Norbornyl oder Norbornenyl,
ein fünf- bis sechsgliedriger, Sauerstoff-, Stickstoff- und/oder Schwefelatome aufweisender Heterocyclus beispielsweise Furyl, Thiophenyl, Pyrryl, Pyridyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl, Difluorpyridyl, Methylthiophenyl, Isopropylthiophenyl oder tert.-Butylthiophenyl und
C₁ bis C₄-Alkyl beispielsweise Methyl, Ethyl, Propyl, Isopropyl, n-Butyl, sec-Butyl oder tert.-Butyl.

C₁ - C₁₈-Alkyloyl (Alkylcarbonyl) kann beispielsweise sein Acetyl, Propionyl, n-Butyloyl, sec-Butyloyl, tert.-Butyloyl, 2-Etylhexylcarbonyl, Decanoyl, Dodecanoyl, Chloracetyl, Trichloracetyl oder Trifluoracetyl.

C₁ - C₁₈- Alkyloxycarbonyl kann beispielsweise sein Methyloxycarbonyl, Ethyloxycarbonyl, Propyloxycarbonyl, Isopropyloxycarbonyl, n-Butyloxycarbonyl, sec-Butyloxycarbonyl, tert.-Butyloxycarbonyl, Hexyloxycarbonyl, 2-Etylhexyloxycarbonyl oder Benzyloxycarbonyl.

C₅ - C₁₂-Cycloalkylcarbonyl kann beispielsweise sein Cyclopentylcarbonyl, Cyclohexylcarbonyl oder Cyclododecylcarbonyl.

C₆ - C₁₂-Aryloyl (Arylcarbonyl) kann beispielsweise sein Benzoyl, Toluyl, Xyloyl, α-Naphthoyl, β-Naphthoyl, Chlorbenzoyl, Dichlorbenzoyl, Trichlorbenzoyl oder Trimethylbenzoyl.

Bevorzugt sind R¹, R², R³, R⁴, R⁵ und R⁶ unabhängig voneinander Wasserstoff, Methyl, Ethyl, n-Butyl, 2-Hydroxyethyl, 2-Cyanoethyl, 2-(Methoxycarbonyl)-ethyl, 2-(Ethoxycarbonyl)-ethyl, 2-(n-Butoxycarbonyl)-ethyl, Dimethylamino, Diethylamino und Chlor.

Bevorzugt ist R⁷ Methyl, Ethyl, n-Butyl, 2-Hydroxyethyl, 2-Cyanoethyl, 2-(Methoxycarbonyl)-ethyl, 2-(Ethoxycarbonyl)-ethyl, 2-(n-Butoxycarbonyl)-ethyl, Acetyl, Propionyl, t-Butyryl, Methoxycarbonyl, Ethoxycarbonyl oder n-Butoxycarbonyl.

Besonders bevorzugte Pyridiniumionen (Ia) sind solche, bei denen einer der Reste R¹ bis R⁵ Methyl, Ethyl oder Chlor ist, R⁷ Acetyl, Methyl, Ethyl oder n-Butyl und alle anderen Wasserstoff sind, oder R³ Dimethylamino, R⁷ Acetyl, Methyl, Ethyl oder n-Butyl und alle anderen Wasserstoff sind oder R⁷ Acetyl, Methyl, Ethyl oder n-Butyl und alle anderen Wasserstoff sind oder R² Carboxy oder Carboxamid, R⁷ Acetyl, Methyl, Ethyl oder n-Butyl und alle anderen Wasserstoff oder R¹ und R² oder R² und R³ 1,4-Buta-1,3-dienylen, R⁷ Acetyl, Methyl, Ethyl oder n-Butyl und alle anderen Wasserstoff sind.

Besonders bevorzugte Pyridaziniumionen (Ib) sind solche, bei denen einer der Reste R¹ bis R⁴ Methyl oder Ethyl, R⁷ Acetyl, Methyl, Ethyl oder n-Butyl und alle anderen Wasserstoff oder R⁷ Acetyl, Methyl, Ethyl oder n-Butyl, und alle anderen Wasserstoff sind.

Besonders bevorzugte Pyrimidiniumionen (Ic) sind solche, bei denen R² bis R⁴ Wasserstoff oder Methyl, R⁷ Acetyl, Methyl, Ethyl oder n-Butyl und R¹ Wasserstoff, Methyl oder Ethyl ist, oder R² und R⁴ Methyl, R³ Wasserstoff und R¹ Wasserstoff, Methyl oder Ethyl und R⁷ Acetyl, Methyl, Ethyl oder n-Butyl ist.

Besonders bevorzugte Pyraziniumionen (Id) sind solche, bei denen
R¹ bis R⁴ alle Methyl und
R⁷ Acetyl, Methyl, Ethyl oder n-Butyl oder R⁷ Acetyl, Methyl, Ethyl oder n-Butyl und alle anderen Wasserstoff sind.

Besonders bevorzugte Imidazoliumionen (Ie) sind solche, bei denen unabhängig voneinander
R¹ ausgewählt ist unter Methyl, Ethyl, n-Propyl, n-Butyl, n-Pentyl, n-Octyl, n-Decyl, n-Dodecyl, 2-Hydroxyethyl oder 2-Cyanoethyl,
R⁷ Acetyl, Methyl, Ethyl oder n-Butyl und.
R² bis R⁴ unabhängig voneinander Wasserstoff, Methyl oder Ethyl bedeuten.

Besonders bevorzugte 1H-Pyrazoliumionen (If) sind solche, bei denen unabhängig voneinander
R¹ unter Wasserstoff, Methyl oder Ethyl,
R², R³ und R⁴ unter Wasserstoff oder Methyl und
R⁷ unter Acetyl, Methyl, Ethyl oder n-Butyl ausgewählt sind.

Besonders bevorzugte 3H-Pyrazoliumionen (Ig) sind solche, bei denen unabhängig voneinander
R¹ unter Wasserstoff, Methyl oder Ethyl,
R², R³ und R⁴ unter Wasserstoff oder Methyl und
R⁷ unter Acetyl, Methyl, Ethyl oder n-Butyl ausgewählt sind.

Besonders bevorzugte 4H-Pyrazoliumionen (Ih) sind solche, bei denen unabhängig voneinander
R¹ bis R⁴ unter Wasserstoff oder Methyl und
R⁷ unter Acetyl, Methyl, Ethyl oder n-Butyl ausgewählt sind.

Besonders bevorzugte 1-Pyrazoliniumionen (Ii) sind solche, bei denen unabhängig voneinander
R¹ bis R⁶ unter Wasserstoff oder Methyl und
R⁷ unter Acetyl, Methyl, Ethyl oder n-Butyl ausgewählt sind.

Besonders bevorzugte 2-Pyrazoliniumionen (Ij) sind solche, bei denen unabhängig voneinander
R¹ unter Wasserstoff, Methyl, Ethyl oder Phenyl,
R⁷ unter Acetyl, Methyl, Ethyl oder n-Butyl und
R² bis R⁶ unter Wasserstoff oder Methyl ausgewählt sind.

Besonders bevorzugte 3-Pyrazoliniumionen (Ik) sind solche, bei denen unabhängig voneinander
R¹ oder R² unter Wasserstoff, Methyl, Ethyl oder Phenyl,
R⁷ unter Acetyl, Methyl, Ethyl oder n-Butyl und
R³ bis R⁶ unter Wasserstoff oder Methyl
ausgewählt sind.

Besonders bevorzugte Imidazoliniumionen (Il) sind solche, bei denen unabhängig voneinander
R¹ oder R² unter Wasserstoff, Methyl, Ethyl, n-Butyl oder Phenyl,
R⁷ unter Acetyl, Methyl, Ethyl oder n-Butyl und
R³ oder R⁴ unter Wasserstoff, Methyl oder Ethyl und
R⁵ oder R⁶ unter Wasserstoff oder Methyl
ausgewählt sind.

Besonders bevorzugte Imidazoliniumionen (Im) sind solche, bei denen unabhängig voneinander
R¹ oder R² unter Wasserstoff, Methyl oder Ethyl,
R⁷ unter Acetyl, Methyl, Ethyl oder n-Butyl und
R³ bis R⁶ unter Wasserstoff oder Methyl
ausgewählt sind.

Besonders bevorzugte Imidazoliniumionen (In) sind solche, bei denen unabhängig voneinander
R¹, R² oder R³ unter Wasserstoff, Methyl oder Ethyl,
R⁷ Acetyl, Methyl, Ethyl oder n-Butyl und
R⁴ bis R⁶ unter Wasserstoff oder Methyl
ausgewählt sind.

Besonders bevorzugte Thiazoliumionen (Io) oder Oxazoliumionen (Ip) sind solche, bei denen unabhängig voneinander
R¹ unter Wasserstoff, Methyl, Ethyl oder Phenyl,
R⁷ unter Acetyl, Methyl, Ethyl oder n-Butyl und
R² oder R³ unter Wasserstoff oder Methyl
ausgewählt sind.

Besonders bevorzugte 1,2,4-Triazoliumionen (Iq) und (Ir) sind solche, bei denen unabhängig voneinander
R¹ oder R² unter Wasserstoff, Methyl, Ethyl oder Phenyl,
R⁷ unter Acetyl, Methyl, Ethyl oder n-Butyl und
R³ unter Wasserstoff, Methyl oder Phenyl
ausgewählt sind.

Besonders bevorzugte 1,2,3-Triazoliumionen (Is) und (It) sind solche, bei denen unabhängig voneinander
R¹ unter Wasserstoff, Methyl oder Ethyl,
R⁷ unter Acetyl, Methyl, Ethyl oder n-Butyl und
R² oder R³ unter Wasserstoff oder Methyl ausgewählt sind oder
R² und R³ 1,4-Buta-1,3-dienylen und alle anderen Wasserstoff sind.

Besonders bevorzugte Pyrrolidiniumionen (Iu) sind solche, bei denen unabhängig voneinander
R¹ und R⁷ unter Acetyl, Methyl, Ethyl oder n-Butyl ausgewählt sind und
R², R³, R⁴ und R⁵ Wasserstoff bedeuten.

Besonders bevorzugte Ammoniumionen (Iv) sind solche, bei denen unabhängig voneinander
R⁷ unter Acetyl, Methyl, Ethyl oder n-Butyl und
R¹, R², und R³ unter Methyl, Ethyl, n-Butyl, 2-Hydroxyethyl, Benzyl oder Phenyl ausgewählt sind.

Besonders bevorzugte Phosphoniumionen (Iw) sind solche, bei denen unabhängig voneinander
R⁷ unter Acetyl, Methyl, Ethyl oder n-Butyl und
R¹, R², und R³ unter Phenyl, Phenoxy, Ethoxy und n-Butoxy
ausgewählt sind.

Unter diesen sind die Ammonium-, Phosphonium-, Pyridinium- und Imidazoliumionen bevorzugt.

Ganz besonders bevorzugt sind als Kationen 1,2-Dimethylpyridinium, 1-Methyl-2-ethylpyridinium, 1-Methyl-2-ethyl-6-methylpyridinium, N-Methylpyridinium, 1-Butyl-2-methylpyridinium, 1-Butyl-2-ethylpyridinium, 1-Butyl-2-ethyl-6-methylpyridinium, N-Butylpyridinium,1-Butyl-4-methylpyridinium, 1,3-Dimethylimidazolium, 1,2,3-Trimethylimidazolium, 1-n-Butyl-3-methylimidazolium, 1,3,4,5-Tetramethylimidazolium, 1,3,4-Trimethylimidazolium, 2,3-Dimethylimidazolium, 1-Butyl-2,3-dimethylimidazolium, 3,4-Dimethylimidazolium, 2-Ethyl-3,4-dimethylimidazolium, 3-Methyl-2-ethylimidazol, 3-Butyl-1-methylimidazolium, 3-Butyl-1-ethylimidazolium, 3-Butyl-1,2-dimethylimidazolium, 1,3-Di-n-Butylimidazolium, 3-Butyl-1,4,5-Trimetylimidazoliuin, 3-Butyl-1,4-Dimethylimidazolium, 3-Butyl-2-methylimidazolium, 1,3-Dibutyl-2-methylimidazolium, 3-Butyl-4-methylimidazolium, 3-Butyl-2-ethyl-4-methylimidazolium und 3-Butyl-2-ethylimidazolium, 1-Methyl-3-Octylimidazolium, 1-Decyl-3-Methylimidazolium.

Insbesondere bevorzugt sind 1-Butyl-4-methylpyridinium, 1-n-Butyl-3-methylimidazolium und 1-n-Butyl-3-ethylimidazolium.

Als Anionen sind prinzipiell alle Anionen denkbar.

Bevorzugt als Anionen sind Halogenide, F⁻, Cl⁻, Br⁻, I⁻, Acetat CH₃COO⁻, Trifluoracetat CF₃COO⁻, Triflat CF₃SO₃⁻, Sulfat SO₄²⁻, Hydrogensulfat HSO₄⁻, Methylsulfat CH₃OSO₃⁻, Ethylsulfat C₂H₅OSO₃⁻, Sulfit SO₃²⁻, Hydrogensulfit HSO₃⁻, Aluminiumchloride AlCl₄⁻, Al₂Cl₇⁻, Al₃Cl₁₀⁻ , Aluminiumtribromid AlBr₄-, Nitrit NO₂⁻, Nitrat NO₃-, Kupferchlorid CuCl₂⁻, Phosphat PO₄³⁻, Hydrogenphosphat HPO₄²⁻, Dihydrogenphosphat H₂PO₄⁻, Carbonat CO₃²⁻, Hydrogencarbonat HCO₃⁻.

Besonders bevorzugt sind Tetrafluoroborat BF₄⁻, Hexafluorophosphat PF₆⁻, Bis(trifluormethylsulfonyl)imid (CF₃SO₂)₂N⁻, Tosylat p-CH₃C₆H₄SO₃⁻.

Unter den Ionischen Flüssigkeiten sind solche ganz besonders bevorzugt, deren Salze einen E_{T}(30)-Wert von > 20, bevorzugt von >30, besonders bevorzugt von > 40 aufweisen. Der E_{T}(30)-Wert ist ein Maß für die Polarität und wird von C. Reichardt in Reichardt, Christian Solvent Effects in Organic Chemistry Weinheim : VCH, 1979. - XI, (Monographs in Modern Chemistry ; 3), ISBN 3-527-25793-4 Seite 241 beschrieben.

Die Änderung des Trennfaktors durch den Entrainer kann nach mehreren Methoden bestimmt werden, bevorzugt nach der Head-Space-Analyse, wie publiziert durch Hachenberg und Schmidt in Verfahrenstechnik, 8(1974), 12 auf den Seiten 343-347. Bei der Bestimmung der Wirkung des Entrainers auf das zu trennende Gemisch (der Feed) wird allgemein auf Entrainer-freier Basis gearbeitet, das heißt, daß die Konzentration des Entrainers in der flüssigen Mischung zwar notiert aber in der prozentualen Konzentrationsangabe der Zielkomponenten nicht berücksichtigt wird.

Geeignet sind solche ionischen Flüssigkeiten, die in einer Gesamtkonzentration in der Flüssigkeit von 5 bis 90 Mol%, bevorzugt 10 bis 70 Mol%, zu einer Veränderung des Trennfaktors der Zielkomponenten untereinander verschieden von eins führen. Diese Veränderung kann in der beschriebenen Head-Space-Analyse festgestellt werden.

Die als Entrainer fungierende ionische Flüssigkeit wird so ausgewählt, daß
sie eine möglichst hohe Selektivität aufweist
sie sich in dem zu trennenden Stoffgemisch zu.mindestens 5mol% homogen löst,
sie keine chemische Reaktion unter Aufbruch von kovalenten Bindungen mit einer der Komponenten des zu trennenden Stoffgemischs eingeht,
die Komponenten des Sumpfproduktes durch Verdampfung infolge von Wärmezufuhr und/oder. Druckabsenkung oder Rektifikation oder Extraktion oder Strippung mit Inertgas oder Überführung in eine feste Phase kostengünstig vom Entrainer abgetrennt werden können.

In der Rektifikationskolonne wird sich keine konstante Konzentration des Ionischen Fluids über der gesamten Höhe der Kolonne einstellen lassen. Es wird sich vielmehr im Verstärkungsteil direkt unterhalb der Zugabestelle des Ionischen Fluids eine höhere Konzentration einstellen im Vergleich zum Abtriebsteil unterhalb des Feedzulaufes. Der quantifizierte Wert von 5 - 90 mol% sollte direkt auf dem Zulaufboden des Ionischen Fluids gemessen werden. Damit wäre eine geeignete Konzentration im Verstärkungsteil, also dort, wo das Azeotrop zu brechen ist, sichergestellt.

Um eine gute Löslichkeit der ionischen Flüssigkeit in dem zu trennenden Gemisch zu erhalten, sollten die Attraktionskräfte zwischen den Molekülen der ionischen Flüssigkeit in etwa genauso groß sein wie zwischen den Molekülen des Feeds. Als intermolekulare Kräfte treten dabei Ionenkräfte, Dipol-Dipol-Kräfte, Induktionskräfte, Dispersionskräfte und Wasserstoff-Brückenbindungen auf, vgl. Ullmann's Encyclopedia of Industrial Chemistry (1993), Vol. A24, S. 438-439. Die Einstellung dieser Kräfte ist bei den ionischen Flüssigkeiten durch die Variation der Kationen möglich. Auf diese Weise können die Löslichkeitseigenschaften reguliert werden. So nimmt z.B. durch eine Verlängerung der Kettenlänge des Alkylrestes an einem Alkyl-Methyl-Imidazolium-Tetrafluoroborat die hydrophobie zu-und damit die Mischbarkeit mit Wasser ab. Besonders gegenüber Aliphaten ist diese Einstellung der Solvationsstärke wirksam, vgl. H. Waffenschmidt, Dissertation, RWTH Aachen, 2000. Auch das Anion besitzt einen Einfluß auf die Löslichkeitseigenschaften. Kriterien für die Abschätzung des Löslichkeitsverhaltens einer ionischen Flüssigkeit sind die Dielektrizitätskonstante der ionischen Flüssigkeit und des Feeds und die Polarität des Gemisches.

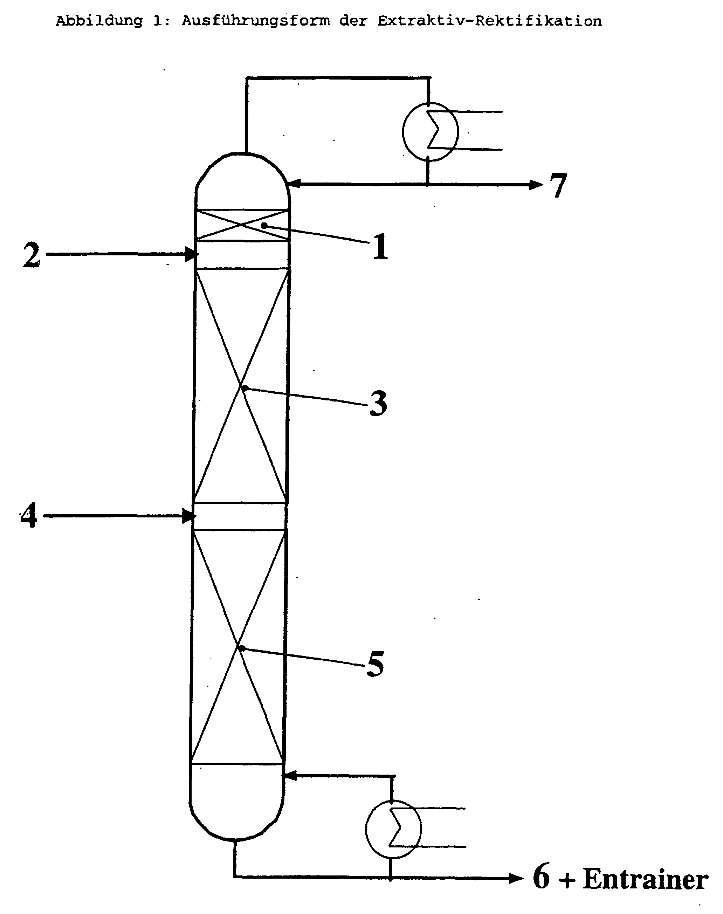

Eine Ausführungsform der Extraktiv-Rektifikation in einem Verfahren wird durch die Abb. 1 verdeutlicht. "2" ist der Zufluß des Entrainers in eine Gegenstrom-Rektifikationskolonne. Da in herkömmlichen Verfahren der Entrainer eine geringe, aber bemerkenswerte Flüchtigkeit bezüglich des Kopfproduktes (Strom 7) besitzt, müssen zur Trennung zwischen Kopfprodukt und Entrainer die Trennelemente "1" verwendet werden. Die Trennelemente "3" und "5" bewirken die gewünschte Trennung zwischen Kopf- und Sumpfprodukt unter Wirkung des Entrainers, Strom "4" ist der Zulauf der zu trennenden Komponenten (Feed), Strom "6" ist Sumpfprodukt und der Entrainer. Trennelemente können beispielsweise Böden, geordnete oder nicht geordnete Füllkörper sein.

Der erfindungsgemäße Prozeß hat den Vorteil, daß -wie erwähntder Dampfdruck der reinen ionischen Flüssigkeit und damit auch ihr Partialdruck in der Mischung mit dem Kopfprodukt annähernd gleich null sind. Damit können im erfindungsgemäßen Verfahren die Trennelemente "1" entfallen.

Das Ionische Fluid wird bevorzugt im Verstärkungsteil nahe am Kopf der Kolonne, besonders bevorzugt in den obersten 3 Stufen, ganz besonders bevorzugt in der obersten Stufe unterhalb des Kondensators zugegeben.

Ein weiterer Vorteil des erfindungsgemäßen Prozesses mit ionischen Flüssigkeit als Entrainer ist, daß zur Abtrennung des Entrainers vom Sumpfprodukt verschiedene Trennoperationen angewendet werden können. Vorteilhafte Ausführungsformen sind:
Regenerierung des Entrainers durch einfache Verdampfung. Da der Dampfdruck des reinen Entrainers und damit auch sein Partialdruck in der Mischung mit dem Sumpfprodukt annähernd gleich null sind, kann ein Eindampfungsprozeß ohne weitere Trennelemente kontinuierlich oder diskontinuierlich betrieben werden. Für das kontinuierliche Eindampfen sind Dünnschichtverdampfer wie Fallfilm- oder Rotorverdampfer besonders geeignet. Bei der diskontinuierlichen Aufkonzentrierung sind zwei Verdampferstufen im Wechsel zu fahren, so daß der Extraktiv-Rektifikationskolonne fortwährend regenerierte ionische Flüssigkeit zugeführt werden kann.
Regenerierung des Entrainers durch eine Abtriebskolonne Da der Dampfdruck des reinen Entrainers und damit auch sein Partialdruck in der Mischung mit dem Sumpfprodukt gleich null sind, kann der Entrainer durch reine Verdampfung nicht vollständig im Gegenstromprozeß vom Sumpfprodukt befreit werden. In einer vorteilhaften Ausführungsform wird heißes Gas in einer Strippkolonne im Gegenstrom zu einer Mischung aus Sumpfprodukt und Entrainer geführt.
Viele ionische Flüssigkeiten zeichnen sich durch Kristallisations- bzw. Glasübergangstemperaturen aus, die deutlich unter 0°C liegen. In diesen Fällen ist eine besonders einfache, kostengünstige Abtrennung und Rückführung der ionischen Flüssigkeit durch Ausfällen in eine feste Phase möglich. Dann wird das Sumpfprodukt in fester Form erhalten, während der Entrainer als reiner Stoff in die Extraktiv-Rektifikation zurückgeführt werden kann. Das Ausfällen kann nach den Lehren der Kühlungskristallisation, Verdampfungskristallisation oder Vakuum-Kristallisation durchgeführt werden. Liegt der Gefrierpunkt des Entrainers oberhalb des Gefrierpunktes des Sumpfproduktes, wird in einer Variante dieses Verfahrens als feste Phase der Entrainer und als flüssige Phase das Sumpfprodukt erhalten.

Der Einsatz von Ionischen Fluiden als Entrainer in der Extraktiv-Rektifikation ist unter anderem für die folgenden Anwendungen besonders geeignet. z.B. Azeotrope: Amine/Wasser, THF/Wasser, Ameisensäure/Wasser, Alkohole/Wasser, Aceton/Methanol, Acetate/Wasser, Acrylate/Wasser oder engsiedende Gemische: Essigsäure/Wasser, C4-Kohlenwasserstoffe, C3-Kohlenwasserstoffe, Alkane/Alkene.

Das erfindungsgemäße Verfahren stellt aus folgenden Gründen eine wesentliche Verbesserung zu den Literaturverfahren der konventionellen Extraktivrektifikation dar:
Ionische Flüssigkeiten sind selektiver als herkömmliche Entrainer. Sie ermöglichen durch ihre vergleichsweise große Selektivität, daß im Vergleich zur konventionellen Extraktivrektifikation ein geringerer Massenstrom an Entrainer der Extraktiv-Rektifikation zugeführt und/oder die Trennstufenanzahl in der Extraktiv- Rektifikationskolonne verringert werden kann.
Durch den äußerst niedrigen Dampfdruck des Entrainers können verschiedene Trennoperationen zur Abtrennung des Entrainers vom Sumpfprodukt verwendet werden, die im Vergleich zur zweiten Rektifikationskolonne bei der konventionellen Extraktivrektifikation einen Vorteil bezüglich Betriebs- und Investkosten ermöglichen.
Die Trennelemente "1" führen in der konventionellen Extraktiv-Rektifikation zu einer Trennung des Entrainers vom Kopfprodukt, die Trennung ist aber nie vollständig. Ein Austrag von Anteilen an ionischer Flüssigkeit über die Dampfphase ohne die Trennelemente "1" ist aufgrund ihrer äußerst geringen Flüchtigkeit nicht möglich.
Investkosten werden durch Wegfall der Trennelemente "1" reduziert.

Im folgenden soll der erfindungsgemäße Prozeß durch Beispiele erläutert werden.

### Beispiel 1

### Trennsystem : Buten-Butan

Das System Buten -Butan ist laut Literatur [Gmehling, J und Onken, U und Arlt,W, Vapor-Liquid Equilibrium Data Collection, Dechema Data Series, Vol. I Part 6a S. 17] engsiedend. Der Trennfaktor, der mittels Gas-Flüssig-Chromatographie (GLC) bei unendlicher Verdünnung von Butan und Buten in der ionischen Flüssigkeit Oktyl-Methyl-Imidazolium Tetrafluoroborat (OMIM - BF₄) bei 70°C gemessen wurde, beträgt 0,74.

Die Berechnung des Trennfaktors in Abhängigkeit vom Aktivitätskoeffizienten wurde von Gmehling und Brehm [Gmehling, J. und Brehm, A. , Grundoperationen, ISBN 3-13-687401-3, Kapitel 3] publiziert.

Der Zusatzstoff geht somit stärkere Wechselwirkungen mit dem Buten als mit dem Butan ein. Durch den gezeigten starken Einfluß der ionischen Flüssigkeit OMIM- BF₄ auf das Phasengleichgewicht des binären Systems Buten-Butan ist die Eignung von OMIM - BF₄ als Entrainer bei Trennung von Alkanen und Alkenen gezeigt.

### Beispiel 2

### Trennsystem : Cyclohexanol-Cyclohexanon

Das System Cyclohexanol-Cyclohexanon ist laut Literatur [Gmehling, J und Onken, U und Arlt,W , Vapor-Liquid Equilibrium Data Collection, Dechema Data Series, Vol. I Part 2b S. 403] engsiedend.

Der Trennfaktor, der mittels Gas-Flüssig-Chromatographie bei unendlicher Verdünnung von Cyclohexanol und Cyclohexanon in den ionischen Flüssigkeiten Ethyl-Methyl-Imidazolium Tetrafluoroborat (EMIM-BF₄) und Ethyl-Methyl-Imidazolium Hexafluorophosphat (EMIM-PF₆) gemessen wurde, beträgt für EMIM-BF₄ 1,66 bei 142°C und für EMIM-PF₆ 1,61 bei 140,8°C. Beide ionischen Flüssigkeiten bewirken eine Erhöhung des Trennfaktors im Trennsystem Cyclohexanol - Cyclohexanon und sind somit als Entrainer geeignet.

### Beispiel 3

### Trennsystem: Aceton-Methanol

Das System Aceton-Methanol bildet laut Literatur [Gmehling, J und Onken, U und Arlt,W , Vapor-Liquid Equilibrium Data Collection, Dechema Data Series, Vol. I Part 2a S. 75] ein Azeotrop. Der Trennfaktor eines Gemisches aus einem Keton und einem Alkohol, hier Aceton - Methanol, wurde mittels GLC in unendlicher Verdünnung in den ionischen Flüssigkeiten EMIM-BF₄, OMIM-BF₄, MMIM-CH₃SO₄, EMIM-(CF₃SO₂)₂N und EMIM-PF₆ bestimmt. Es ergaben sich Trennfaktoren für EMIM-BF₄ von 2,51 bei 70°C, OMIM-BF₄ von 3,15 bei 70°C, MMIM-CH₃SO₄ von 1,3 bei 70,5°C, EMIM-(CF₃SO₂)₂N von 0,5 bei 84,6°C und EMIM-PF₆ von 0,67 bei 70°C. Hieran ist zu erkennen, daß nicht nur einzelne ionische Flüssigkeiten als Entrainer geeignet sind. Vielmehr eignen sich viele Vertreter der neuartigen Substanzklasse der ionischen Flüssigkeiten zu einer Verwendung als Entrainer.

Im folgenden soll der erfindungsgemäße Prozeß durch weitere Beispiele unter Nutzung der Head-Space-Analyse erläutert werden.

### Beispiel 4

Einfluß der ionischen Flüssigkeit 1-Ethyl-3-methyl-imidazolium tetrafluoroborat auf das homoazeotrope binäre System Ethanol-Wasser.

In Tabelle 1 ist der Einfluß des Zusatzstoffes (Entrainer) 1-Ethyl-3-methyl-imidazolium tetrafluoroborat auf das binäre System Ethanol Wasser bei ϑ=70°C und einer molaren Flüssigkonzentration des Entrainers von 10 mol% und 50 mol% dargestellt.

**Tabelle 1 :**

| Trennfaktor α des binären, homoazeotropen Systems Ethanol-Wasser bei 70°C und unterschiedlichen Mengen der ionischen Flüssigkeit 1-Ethyl-3-methyl-imidazolium tetrafluoroborat | | | | | |
|---|---|---|---|---|---|
| ^{**x**}**Ethanol [Mol %]** | ^{**x**}**Wasser [Mol %]** | ^{**α**}**Ethanol, Wasser** binäres System ohne erfindungsgemäßen Entrainer | ^{**α**}**Ethanol, Wasser** ternäres System mit 10 Mol% an erfindungsgemäßem Entrainer | ^{**α**}**Ethanol, Wasser** ternäres System mit 50 Mol% an erfindungsgemäßem Entrainer | ^{**α**}**Ethanol, Wasser** ternäres System mit 70 Mol% an erfindungsgemäßem Entrainer |
| 0,10 | 0,90 | 7,12 | 4,64 | 5,74 | 6,23 |
| 0,20 | 0,80 | 4,45 | 3,90 | 5,49 | 6,11 |
| 0,30 | 0,70 | 2,99 | 3,25 | 5,17 | 6,00 |
| 0,40 | 0,60 | 2,37 | 2,70 | 4,77 | 5,86 |
| 0,50 | 0,50 | 1,88 | 2,41 | 4,57 | 5,72 |
| 0,60 | 0,40 | 1,58 | 2,12 | 4,38 | 5,58 |
| 0,70 | 0,30 | 1,34 | 1,85 | 4,20 | 5,25 |
| 0,80 | 0,20 | 1,17 | 1,68 | 4,02 | 4,95 |
| 0,90 | 0,10 | 1,06 | 1,48 | 3,99 | 4,90 |
| 0,95 | 0,05 | 1,00 | 1,32 | 3,56 | 4,87 |

Das Azeotrop Ethanol-Wasser liegt bei etwa x_{Ethanol}=0, 95. Genau in diesem Bereich wirkt der Entrainer selbst bei 10 mol% Anteil in der flüssigen Phase. Die Tatsache, daß in diesem und in den folgenden Beispielen im Randbereich ohne Entrainer ein höherer Trennfaktor erreicht wird als mit Entrainer ist nicht von Nachteil, da
a) eine Vorkonzentrierung ohne Entrainer vorgenommen werden kann.
b) Trennfaktoren etwa >5 praktisch keinen Einfluß auf die Betriebs- und Investkosten haben.

### Beispiel 5

Einfluß der ionischen Flüssigkeit 1-Ethyl-3-methyl-imidazolium tetrafluoroborat auf das homoazeotrope binäre System Tetrahydrofuran-Wasser.

In Tabelle 2 ist der Einfluß des Entrainers 1-Ethyl-3-methyl-imidazolium tetrafluoroborat auf das binäre System Tetrahydrofuran(THF)-Wasser bei 70°C und einer molaren Flüssigkonzentration des Entrainers von 50 Mol% dargestellt.

**Tabelle 2:**

| Trennfaktor α des homoazeotropen Systems Tetrahydrofuran(THF)-Wasser bei 70°C mit und ohne ionische Flüssigkeit 1-Ethyl-3-methyl-imidazolium tetrafluoroborat. | | | |
|---|---|---|---|
| ^{**x**}**THF [Mol %]** | ^{**x**}**Wasser [Mol %]** | ^{**α**}**THF, Wasser** binäres System ohne erfindungsgemäßen Entrainer | ^{**α**}**THF, Wasser** ternäres System mit 50 Mol% an erfindungsgemäßem Entrainer |
| 0,10 | 0,90 | 25,54 | 18,09 |
| 0,20 | 0,80 | 12,38 | 16,73 |
| 0,30 | 0,70 | 7,97 | 15,37 |
| 0,40 | 0,60 | 5,59 | 14,01 |
| 0,50 | 0,50 | 3,87 | 12,65 |
| 0,60 | 0,40 | 2,56 | 11,29 |
| 0,70 | 0,30 | 1,64 | 9,93 |
| 0,80 | 0,20 | 1,10 | 8,57 |
| 0,90 | 0,10 | 0,79 | 7,21 |

Das Azeotrop bei x_{THF} zwischen 0,8 und 0,9 wird eindrucksvoll entfernt.

### Beispiel 5a

Einfluß der ionischen Flüssigkeit 1-Ethyl-3-methyl-imidazolium tetrafluorotosylat auf das homoazeotrope binäre System Tetrahydrofuran-Wasser.

In Tabelle 2a ist der Einfluß des Entrainers 1-Ethyl-3-methylimidazolium tetrafluorotosylat auf das binäre System Tetrahydrofuran(THF)-Wasser bei einem Druck von 1 bar und einer molaren Flüssigkonzentration des Entrainers von 50 Mol% dargestellt.

**Tabelle 2a:**

| Trennfaktor α des Systems Tetrahydrofuran(THF)-Wasser bei 1 bar mit ionischer Flüssigkeit 1-Ethyl-3-methyl-imidazolium tetrafluorotosilat. Messergebnisse sind hier nicht mit Head-Space-Chromatographie, sondern mit einer Gleichgewichtsapparatur vermessen worden. Auch hier ist eine deutliche Erhöhung des Trennfaktors gegenüber dem binären System (siehe Tabelle 2) und damit die Eignung des ionischen Fluids als Entrainer zu erkennen. | | |
|---|---|---|
| ^{**x**}**THF** [Mol %] | ^{**x**}**Wasser** [Mol %] | ^{**α**}**THF, Wasser** ternäres System mit *50* Mol% an erfindungsgemäBem Entrainer |
| 0,2459 | 0,7541 | 23,3 |
| 0,3843 | 0,6157 | 24,7 |
| 0,5355 | 0,4645 | 23,8 |
| 0,6307 | 0,3693 | 22,8 |

### Beispiel 6

Einfluß der ionischen Flüssigkeit 1-Ethyl-3-methyl-imidazolium tetrafluoroborat auf das homoazeotrope binäre System Propanol-Wasser.

In Tabelle 3 ist der Einfluß des Entrainers 1-Ethyl-3-methyl-imidazolium tetrafluoroborat auf das binäre System Propanol-Wasser bei 85°C und einer molaren Flüssigkonzentration des Entrainers von 50 Mol% dargestellt.

**Tabelle 3:**

| Trennfaktor α des homoazeotropen Systems Propanol-Wasser bei 85°C mit und ohne ionischen Flüssigkeit 1-Ethyl-3-methylimidazolium tetrafluoroborat. | | | |
|---|---|---|---|
| ^{**x**}**Propanol** [Mol %] | ^{**x**}**Wasser** [Mol %] | ^{**α**}**Propanol, Wasser** binäres System ohne erfindungsgemäßen Entrainer | ^{**α**}**Propanol, Wasser** ternäres System mit 50 Mol% an erfindungsgemäßem Entrainer |
| 0,4 | 0,6 | 1,10 | 3,12 |
| 0,6 | 0,4 | 0,68 | 2,46 |

### Beispiel 7

Einfluß der ionischen Flüssigkeit 1-Ethyl-3-methyl-imidazolium tetrafluoroborat auf das homoazeotrope binäre System Isopropanol-Wasser.

In Tabelle 4 ist der Einfluß des Entrainers 1-Ethyl-3-methyl-imidazolium tetrafluoroborat auf das binäre System Isopropanol-Wasser bei 90°C und einer molaren Flüssigkonzentration des Entrainers von 50 Mol% dargestellt.

**Tabelle 4:**

| Trennfaktor α des homoazeotropen Systems Isopropanol-Wasser bei 90°C mit und ohne ionische Flüssigkeit 1-Ethyl-3-methyl-imidazolium tetrafluoroborat. | | | |
|---|---|---|---|
| ^{**x**}**Isopropanol** [Mol %] | ^{**x**}**Wasser** [Mol %] | ^{**α**}**Isopropanol, Wasser** binäres System ohne erfindungsgemäßen Entrainer | ^{**α**}**Isopropanol, Wasser** ternäres System mit 50 Mol% an erfindungsgemäßem Entrainer |
| 0,4 | 0,6 | 2.09 | 5,73 |
| 0,6 | 0,4 | 1,29 | 4,64 |

In den Tabellen 1 bis 4 ist ein deutlicher Unterschied zwischen den binären Phasenzusammensetzungen und den -nach Zugabe des erfindungsgemäßen, nichtflüchtigen Entrainers 1-Ethyl-3-methylimidazolium tetrafluoroborat sich einstellenden- ternären Phasengleichgewichtszusammensetzungen erkennbar. Die ionische Flüssigkeit hat durch selektive Wechselwirkungen mit der polareren Systemkomponente, dem Wasser, den Trennfaktor vorteilhaft beeinflußt. Darüber hinaus ist deutlich erkennbar, daß in den Systemen Ethanol-Wasser (Tabelle 1) und Tetrahydrofuran-Wasser (Tabelle 2) der Einfluß der ionischen Flüssigkeit auf das Dampf-Flüssig-Phasengleichgewicht so groß ist, daß der azeotrope Punkt aufgebrochen wurde, das heißt nicht mehr auftritt.

### Beispiel 8

Vorteil eines der erfindungsgemäßen Entrainer gegenüber konventionellen Entrainern am Beispiel der Trennung von Ethanol-Wasser

In Tabelle 5 ist für das System Ethanol-Wasser der Einfluß der beiden Entrainer 1-Ethyl-3-methyl-imidazolium tetrafluoroborat und Ethandiol auf das Dampf-Flüssig-Phasengleichgewicht bei 70°C für die Entrainerkonzentration von 50 Mol% dargestellt.

**Tabelle 5:**

| Gegenüberstellung der Trennfaktoren α im System Ethanol-Wasser bei 70°C für den konventionellen Entrainer Ethandiol und den erfindungsgemäßen Entrainer 1-Ethyl-3-methyl-imidazolium tetrafluoroborat | | | | |
|---|---|---|---|---|
| ^{**x**}**Ethanol [Mol %]** | ^{**x**}**Wasser [Mol %]** | ^{**α**}**Ethanol, Wasser** binäres System ohne erfindungsgemäßen Entrainer | ^{**α**}**Ethanol, Wasser** ternäres System mit 50 Mol% an Ethandiol | ^{**α**}**Ethanol, Wasser** ternäres System mit 50 Mol% an erfindungsgemäßem Entrainer |
| 0,10 | 0,90 | 7,12 | 4,96 | 5,74 |
| 0,20 | 0,80 | 4,45 | 4,37 | 5,49 |
| 0,30 | 0,70 | 2,99 | 3,77 | 5,17 |
| 0,40 | 0,60 | 2,37 | 3,45 | 4,77 |
| 0,50 | 0,50 | 1,88 | 3,14 | 4,57 |
| 0,60 | 0,40 | 1,58 | 2,82 | 4,38 |
| 0,70 | 0,30 | 1,34 | 2,63 | 4,20 |
| 0,80 | 0,20 | 1,17 | 2,44 | 4,02 |
| 0,90 | 0,10 | 1,06 | 1,83 | 3,99 |
| 0,95 | 0,05 | 1,00 | 1,32 | 3,56 |

Aus Tabelle 5 geht hervor, daß für die gleiche Entrainerkonzentration der Einfluß auf das Dampf-Flüssig-Phasengleichgewicht und damit der Nutzeffekt im Fall der ionischen Flüssigkeit insbesondere im azeotropen Bereich deutlich größer ist.

## Patentansprüche

1. Verfahren zur Trennung von Flüssigkeiten oder kondensierbaren Gasen im kondensierten Zustand, **dadurch gekennzeichnet, daß**
ein Entrainer benutzt wird, der eine ionische Flüssigkeit ist und eine Veränderung des Trennfaktors der zu trennenden Komponenten abweichend von eins bewirkt,
die ionische Flüssigkeit in einer Gesamtkonzentration von 5 bis 90 Mol%, bevorzugt 10 bis 70 Mol% in der flüssigen Phase vorliegt.

2. Verfahren nach Anspruch 1, **dadurch gekennzeichnet, daß** die Trennung durch Extraktiv-Rektifikation in einer Kolonne durchgeführt wird, und daß
die unter den Bedingungen des Anspruchs 1 leichtsiedende Komponente oder Komponenten am Kopf der Kolonne erhalten werden, während alle anderen Komponenten als Sumpfprodukt zusammen mit dem Entrainer am Sumpf der Kolonne anfallen,
das Flüssiggemisch am Sumpf der Kolonne (Sumpfprodukt und Entrainer) so aufgearbeitet wird, daß der Entrainer wiedergewonnen werden kann und die Komponenten des Sumpfproduktes als weitere Fraktion anfallen,
die Kolonne im Gegenstrom betrieben wird,
oberhalb des Feeds der zu trennenden Komponenten der Entrainer in die Kolonne zugeführt wird.

3. Verfahren nach Anspruch 2, **dadurch gekennzeichnet, daß** die Abtrennung des Sumpfproduktes vom Entrainer durch Eindampfung in Verdampfern oder in Rektifikationskolonnen erfolgt.

4. Verfahren nach Anspruch 2, **dadurch gekennzeichnet, daß** die Aufarbeitung des Gemischs aus Sumpfprodukt und Entrainer durch Ausfällen des Bestandteiles erfolgt, der den höheren Gefrierpunkt hat.

5. Verfahren nach Anspruch 2, **dadurch gekennzeichnet, daß** die Abtrennung des Sumpfproduktes vom Entrainer durch Trocknung erfolgt.

6. Verfahren nach Anspruch 2, **dadurch gekennzeichnet, daß** die Abtrennung des Sumpfproduktes vom Entrainer durch Extraktion erfolgt.

7. Verfahren nach Anspruch 2, **dadurch gekennzeichnet, daß** keine Trennelemente oberhalb des Zulaufes des Entrainers in die Extraktiv-Rektifikation benötigt werden.

8. Verfahren nach Anspruch 1, **dadurch gekennzeichnet, daß** der Feed ein Wasser-enthaltendes System ist, das neben Wasser
Alkohole mit einer Kohlenstoffzahl zwischen 1 und 12, bevorzugt zwischen 1 und 8, besonders bevorzugt zwischen 1 und 5 ,
organische Säuren, vorzugsweise Alkansäuren,
Ketone,
Furane
enthält und eine Abtrennung des Wassers von den übrigen Stoffen erreicht wird.

9. Verfahren nach Anspruch 1, **dadurch gekennzeichnet, daß** der Feed Alkane und Alkene mit einer Kohlenstoffzahl zwischen 3 und 12, bevorzugt zwischen 4 und 10 enthält und eine Trennung zwischen Alkanen und Alkenen erreicht wird.

10. Verfahren nach Anspruch 1, **dadurch gekennzeichnet, daß** der Feed aromatische und aliphatische Kohlenwasserstoffe enthält und eine Trennung zwischen Aromaten und Aliphaten erreicht wird.

11. Verfahren nach Anspruch 1, **dadurch gekennzeichnet, daß** der Feed Ketone und alicyclische Verbindungen enthält und die Ketone von den alicyclischen Komponenten getrennt werden.

12. Verfahren nach Anspruch 1, **dadurch gekennzeichnet, daß** der Feed Amide und Säuren, bevorzugt Carbonsäuren, enthält und die Amide von den Säuren getrennt werden.

13. Verfahren nach Anspruch 1, **dadurch gekennzeichnet, daß** der Feed Alkohole und Alkane enthält und die Alkane von den Alkoholen getrennt werden.

14. Verfahren nach Anspruch 1, **dadurch gekennzeichnet, daß** der Feed Alkohole und Aromaten enthält und die Alkohole von den Aromaten getrennt werden.

15. Verfahren nach Anspruch 1, **dadurch gekennzeichnet, daß** der Feed Ketone und Alkohole enthält und die Ketone von den Alkoholen getrennt werden.

16. Verfahren nach Anspruch 1, **dadurch gekennzeichnet, daß** der Feed Acetate und Ketone enthält und die Acetate von den Ketonen getrennt werden.

17. Verfahren nach Anspruch 1, **dadurch gekennzeichnet, daß** der Feed Ether und Alkane enthält und die Ether von den Alkanen getrennt werden.

18. Verfahren nach Anspruch 1, **dadurch gekennzeichnet, daß** der Feed Ether und Alkene enthält und die Ether von den Alkenen getrennt werden.

19. Verfahren nach Anspruch 1, **dadurch gekennzeichnet, daß** der Feed Sulfide und Ketone enthält und die Sulfide von den Ketonen getrennt werden.

20. Verfahren nach Anspruch 1, **dadurch gekennzeichnet, daß** der Feed Halogenkohlenwasserstoffe und Ketone enthält und die Halogenkohlenwasserstoffe von den Ketonen getrennt werden.

21. Verfahren nach Anspruch 15, **dadurch gekennzeichnet, daß** der Feed cyclische Ketone und / oder cyclische Alkohole enthält und das diese voneinander getrennt werden.

22. Verfahren nach Anspruch 1, **dadurch gekennzeichnet, daß** das Anion der als Entrainer verwendeten ionischen Flüssigkeit ein Metall-Halogenid ist.

23. Verfahren nach Anspruch 1, **dadurch gekennzeichnet, daß** die als Entrainer verwendete ionische Flüssigkeit ein Anion wie das Nitrat-Anion oder das Tetrachloroaluminat-Anion oder das Tetrafluoroborat-Anion oder das Heptachlorodialuminat-Anion oder das Hexafluorophosphast-Anion oder das Methylsulfat-Anion oder reine Halogenid-Anionen hat.

24. Verfahren nach Anspruch 1, **dadurch gekennzeichnet, daß** die als Entrainer verwendete ionische Flüssigkeit ein Kation wie das Imidazolium-Kation oder das Pyridinium-Kation oder das Ammonium-Kation oder das Phosphonium-Kation hat.

25. Verfahren nach Anspruch 1, **dadurch gekennzeichnet, daß** Mischungen von ionischen Flüssigkeiten als Entrainer benutzt werden.

26. Verfahren nach Anspruch 2, **dadurch gekennzeichnet, daß** die Abtrennung des Sumpfproduktes vom Entrainer durch Strippung mit einem Inertgas erfolgt.

27. Anwendung des Verfahrens nach Anspruch 1 bis 26 zur Trennung von Flüssigkeiten oder Gasen im kondensierten Zustand.

## Claims

1. A method for separating liquids or condensable gases in the condensed state comprising:
use of an entrainer which is an ionic liquid and brings about a change in the separation factor of the components to be separated divergent from one;
the ionic liquid being present at a total concentration of 5 to 90 mol%, preferably 10 to 70 mol% in the liquid phase.

2. The method as claimed in claim 1, comprising the separation being carried out by means of extractive rectification in a column and wherein:
the low-boiling component or components under the conditions of claim 1 are obtained at the top of the column while all other components are obtained as bottom product together with said entrainer at the bottom of the column,
the liquid mixture at the bottom of the column (bottom product and entrainer) is worked up in such a way that said entrainer can be recovered and the components of the bottom product are obtained as a further fraction,
the column is operated in countercurrent flow,
said entrainer is introduced into the column above the feed of the components to be separated.

3. The method as claimed in claim 2, wherein the separation of said bottom product from said entrainer is carried out by evaporation in evaporators or in rectification columns.

4. The method as claimed in claim 2, wherein the work-up of the mixture of bottom product and entrainer ensues by precipitation of the component which has the higher freezing point.

5. The method as claimed in claim 2, wherein the separation of said bottom product from said entrainer is effected by drying.

6. The method as claimed in claim 2, wherein the separation of said bottom product from said entrainer is effected by extraction.

7. The method as claimed in claim 2, wherein no separative elements are needed above the point of admission of said entrainer into the extractive rectification system.

8. The method as claimed in claim 1, wherein the feed is a water-containing system which in addition to water contains
alcohols having a carbon number between 1 and 12, preferably between 1 and 8, particularly preferably between 1 and 5,
organic acids, preferably alkanoic acids,
ketones,
furans
and separation of the water from the other substances is achieved.

9. The method as claimed in claim 1, wherein said feed contains alkanes and alkenes having a carbon number between 3 and 12, preferably between 4 and 10 and separation between alkanes and alkenes is achieved.

10. The method as claimed in claim 1, wherein said feed contains aromatic and aliphatic hydrocarbons and separation between aromatics and aliphatics is achieved.

11. The method as claimed in claim 1, wherein said feed contains ketones and alicyclic compounds and the ketones are separated from the alicyclic components.

12. The method as claimed in claim 1, wherein said feed contains amides and acids, preferably carboxylic acids, and the amides are separated from the acids.

13. The method as claimed in claim 1, wherein said feed contains alcohols and alkanes and the alkanes are separated from the alcohols.

14. The method as claimed in claim 1, wherein said feed contains alcohols and aromatics and the alcohols are separated from the aromatics.

15. The method as claimed in claim 1, wherein said feed contains ketones and alcohols and the ketones are separated from the alcohols.

16. The method as claimed in claim 1, wherein said feed contains acetates and ketones and the acetates are separated from the ketones.

17. The method as claimed in claim 1, wherein said feed contains ethers and alkanes and the ethers are separated from the alkanes.

18. The method as claimed in claim 1, wherein said feed contains ethers and alkenes and the ethers are separated from the alkenes.

19. The method as claimed in claim 1, wherein said feed contains sulfides and ketones and the sulfides are separated from the ketones.

20. The method as claimed in claim 1, wherein said feed contains halogenated hydrocarbons and ketones and the halogenated hydrocarbons are separated from the ketones.

21. The method as claimed in claim 15, wherein said feed contains cyclic ketones and/or cyclic alcohols and these are separated from one another.

22. The method as claimed in claim 1, wherein the anion of said ionic liquid used as said entrainer is a metallic halide.

23. The method as claimed in claim 1, wherein said ionic liquid used as said entrainer has an anion such as the nitrate anion or the tetrachloroaluminate anion or the tetrafluoroborate anion or the heptachlorodialuminate anion or the hexafluorophosphate anion or the methylsulfate anion or pure halide anions.

24. The method as claimed in claim 1, wherein said ionic liquid used as said entrainer has a cation such as the imidazolium cation or the pyridinium cation or the ammonium cation or the phosphonium cation.

25. The method as claimed in claim 1, wherein mixtures of ionic liquids are used as said entrainer.

26. The method as claimed in claim 2, wherein the separation of said bottom product from said entrainer is effected by means of stripping using an inert gas.

27. The use of a method as claimed in any of claims 1 to 26 for separating liquids or gases in the condensed state.

## Revendications

1. Procédé de séparation de liquides ou de gaz condensables à l'état condensé, **caractérisé par le fait que**
- l'on utilise un agent d'entraînement qui est un liquide ionique et qui provoque une variation du facteur de séparation des composants à séparer différente de un,
- le liquide ionique est présent dans la phase liquide en une concentration totale de 5 à 90 % en moles, de préférence 10 à 70 % en moles.

2. Procédé selon la revendication 1, **caractérisé par le fait que** la séparation s'effectue par rectification extractive dans une colonne et que
on obtient les composants venant facilement à ébullition dans les conditions de la revendication 1 ou des composants en tête de la colonne, tandis que tous les autres composants se présentent au bas de la colonne comme produit de bas de colonne avec l'agent d'entraînement, le mélange liquide au bas de la colonne (produit de bas de colonne et agent d'entraînement) est traité de manière à ce que l'agent d'entraînement puisse être récupéré et que les composants du produit de bas de colonne se présentent comme autre fraction,
la colonne est exploitée en contre-courant,
l'agent d'entraînement est introduit dans la colonne au-dessus de l'alimentation en composants à séparer.

3. Procédé selon la revendication 2, **caractérisé par le fait que** la séparation du produit de bas de colonne et de l'agent d'entraînement est réalisée par réduction par évaporation dans des évaporateurs ou dans des colonnes de rectification.

4. Procédé selon la revendication 2, **caractérisé par le fait que** le traitement du mélange constitué du produit de bas de colonne et de l'agent d'entraînement est réalisé par précipitation du composant qui possède le point de congélation le plus élevé.

5. Procédé selon la revendication 2, **caractérisé par le fait que** la séparation du produit de bas de colonne et de l'agent d'entraînement est réalisée par séchage.

6. Procédé selon la revendication 2, **caractérisé par le fait que** la séparation du produit de bas de colonne et de l'agent d'entraînement est réalisée par extraction.

7. Procédé selon la revendication 2, **caractérisé par le fait qu'**aucun élément de séparation n'est nécessaire au-dessus de l'entrée de l'agent d'entraînement dans la rectification extractive.

8. Procédé selon la revendication 1, **caractérisé par le fait que** l'alimentation est un système contenant de l'eau qui, en plus de l'eau, contient
des alcools ayant un indice de carbone entre 1 et 12,
de préférence entre 1 et 8, plus préférablement entre 1 et 5,
des acides organiques, de préférence des acides d'alcane,
des cétones,
des furanes
et qu'on obtient une séparation entre l'eau et les autres substances.

9. Procédé selon la revendication 1, **caractérisé par le fait que** l'alimentation contient des alcanes et des alcènes ayant un indice de carbone entre 3 et 12, de préférence entre 4 et 10, et qu'on obtient une séparation entre alcanes et alcènes.

10. Procédé selon la revendication 1, **caractérisé par le fait que** l'alimentation contient des hydrocarbures aromatiques et aliphatiques et qu'on obtient une séparation entre aromates et composés aliphatiques.

11. Procédé selon la revendication 1, **caractérisé par le fait que** l'alimentation contient des cétones et des composés alicycliques et que les cétones sont séparées des composants alicycliques.

12. Procédé selon la revendication 1, **caractérisé par le fait que** l'alimentation contient des amides et des acides, de préférence des acides carboxyliques, et que les amides sont séparés des acides.

13. Procédé selon la revendication 1, **caractérisé par le fait que** l'alimentation contient des alcools et des alcanes et que les alcanes sont séparés des alcools.

14. Procédé selon la revendication 1, **caractérisé par le fait que** l'alimentation contient des alcools et des aromates et que les alcools sont séparés des aromates.

15. Procédé selon la revendication 1, **caractérisé par le fait que** l'alimentation contient des cétones et des alcools et que les cétones sont séparées des alcools.

16. Procédé selon la revendication 1, **caractérisé par le fait que** l'alimentation contient des acétates et des cétones et que les acétates sont séparés des cétones.

17. Procédé selon la revendication 1, **caractérisé par le fait que** l'alimentation contient des éthers et des alcanes et que les éthers sont séparés des alcanes.

18. Procédé selon la revendication 1, **caractérisé par le fait que** l'alimentation contient des éthers et des alcènes et que les éthers sont séparés des alcènes.

19. Procédé selon la revendication 1, **caractérisé par le fait que** l'alimentation contient des sulfures et des cétones et que les sulfures sont séparés des cétones.

20. Procédé selon la revendication 1, **caractérisé par le fait que** l'alimentation contient des hydrocarbures halogénés et des cétones et que les hydrocarbures halogénés sont séparés des cétones.

21. Procédé selon la revendication 15, **caractérisé par le fait que** l'alimentation contient des cétones cycliques et/ou des alcools cycliques et que ceux-ci sont séparés les uns des autres.

22. Procédé selon la revendication 1, **caractérisé par le fait que** l'anion du liquide ionique utilisé comme agent d'entraînement est un halogénure métallique.

23. Procédé selon la revendication 1, **caractérisé par le fait que** le liquide ionique utilisé comme agent d'entraînement possède un anion comme l'anion de nitrate ou l'anion tétrachloroaluminate ou l'anion tétrafluoroborate ou l'anion heptachlorodialuminate ou l'anion hexafluorophosphate ou l'anion méthylsulfate ou des anions purs d'halogénure.

24. Procédé selon la revendication 1, **caractérisé par le fait que** le liquide ionique utilisé comme agent d'entraînement possède un cation comme le cation imidazolium ou le cation pyridinium ou le cation ammonium ou le cation phosphonium.

25. Procédé selon la revendication 1, **caractérisé par le fait que** des mélanges de liquides ioniques sont utilisés comme agent d'entraînement.

26. Procédé selon la revendication 2, **caractérisé par le fait que** la séparation du produit de bas de colonne et de l'agent d'entraînement est réalisée par stripping avec un gaz inerte.

27. Application du procédé selon l'une des revendications 1 à 26 pour la séparation de liquides ou de gaz à l'état condensé.
